# EUROPEAN PATENT APPLICATION

(11) **EP 4 803 289 A2**
(43) Date of publication of application: **09.09.2026**
(21) Application number: 26185236.2
(22) Date of filing: 28.06.2023
(51) Int. Cl.: B29C 65/48

(54) **METHOD FOR BONDING PARTS WITH REDUCED READ-THROUGH DEFORMATION**

(30) Priority: 06.07.2022 EP 22183452
(62) Document number(s) of the earlier application(s) in accordance with Art. 76 EPC: 23735770.2 / 4 551 641
(71) Applicant: Sika Technology AG, 6340 Baar (CH)
(72) Inventor: FUNKE, Björn, 22525 Hamburg (DE); VOCI, Antonio, 8967 Widen (CH); BERLI, Kurt, 8967 Widen (CH); RHEINEGGER, Urs, 8048 Zürich (CH)
(74) Representative: Sika Patent Attorneys

(57) **Abstract**

Disclosed is a method for bonding two substrates comprising the sequential steps of
- i) applying a pumpable thermally foaming filler composition on a first substrate S1, and
- ii) placing the second substrate S2 so that the distance between the first substrate S1 and the second substrate S2 at the place of application of the pumpable thermally foaming filler composition is between 2 - 10 mm, and
- iii) heating the first substrate S1 and the second substrate S2 to a temperature above the activation temperature of the foaming agent to foam the pumpable thermally foaming filler composition, wherein between step ii) and step iii) the applied pumpable thermally foaming filler composition is not in contact with the second substrate S2.

The method of bonding substrates with a thermally expandable composition provides a reduced bond line read through (BLRT) phenomenon.

## Description

### Technical Field

The present invention relates to a method of bonding substrates, especially in the automobile industry, or an article of white goods with a pumpable thermally foaming filler composition.

### Background of the Invention

Manufactured products often contain hollow parts that result from the manufacturing process and/or that are designed into the product for various purposes, such as weight reduction. Automotive vehicles, for example, include several such hollow parts throughout the vehicle, including in the vehicle's roof, engine hood, trunk hood and in vehicle doors. It is often desirable to connect/bond the parts/substrates forming the hollow parts additionally at least at certain places so as to minimise vibrations and noise through such vibrations caused upon movement of the vehicle.

A suitable composition to connect these parts/substrates for vibration reduction is able to expand its volume when heat is applied in order to increase its flexibility and to reduce alterations of the surface on the bonded parts also called "read-through" for aesthetic reasons. For example, during the manufacture process of a vehicle, the hollow parts of a vehicle's roof can contain applied beads of an uncured composition between roof beam and the roof layer. These beads are applied with a sufficient thickness to safeguard a firm and direct contact of the applied uncured composition with the roof beam and the roof layer. This application in specific places allows for covering a large area by an electro-coating liquid while applied beads of an uncured composition between upper and the lower roof layer are already inserted, and afterwards during a heat treatment step, the expandable composition expands and firmly connects the two layers in order to minimise vibrations and noise through such vibrations caused upon movement of the vehicle.

Specific material properties of the cured adhesive composition are of fundamental importance with respect to the mentioned bond line read through (BLRT) phenomenon. Adhesive BLRT is a visible distortion of the substrate over a cured adhesive bond-line. The deformations are primarily the result of a difference in the thermal expansion coefficients between the substrate and the adhesive. With the ongoing trend of light weighting in the automotive industry (e.g.) more and more thinner sheet metals are used for car manufacturing. With decreasing steel thickness and bending stiffness BLRT effects, caused by the composition, occur more frequently. Therefore, BLRT optimized adhesive compositions are inquired more and more.

WO2020048905 A1 describes a rubber composition, comprising at least one solid rubber, a processing oil, a vulcanization system, filler and a blowing agent with improved BLRT performance. However, the BLRT performance still has potential for improvement.

It is thus desirable to provide a method of bonding substrates with a thermally expandable composition advantageous in terms of improved BLRT performance.

### Summary of the Invention

It is an object of the present invention to provide a method of bonding substrates with a thermally expandable composition that provides a reduced BLRT phenomenon.

Surprisingly, the present invention provides a solution to that problem by providing a method for bonding two substrates comprising the sequential steps of
- i) applying a pumpable thermally foaming filler composition on a first substrate S1, wherein the pumpable thermally foaming filler composition has a viscosity in the range of 50 to 500 Pa.s, when measured by means of a rheometer with heatable plate (MCR 301, AntonPaar) (gap 1000 µm, measuring plate diameter: 25 mm (plate/plate), deformation 0.01-10 % at 10 Hz, temperature: 45°C), and
- ii) placing the second substrate S2 so that the distance between the first substrate S1 and the second substrate S2 at the place of application of the pumpable thermally foaming filler composition is between 2 - 10 mm, and
- iii) heating the first substrate S1 and the second substrate S2 to a temperature above the activation temperature of the foaming agent to foam the pumpable thermally foaming filler composition, wherein between step ii and step iii) the applied pumpable thermally foaming filler composition is not in contact with the second substrate S2.

In an embodiment, the pumpable thermally foaming filler composition comprises:
- at least one rubber, preferably a synthetic rubber, more preferably a partially crosslinked synthetic rubber and more preferably a diene rubber, preferably in an amount from 1 to 20%, preferably 3 to 15 wt.-% and more preferably 5 to 10 wt.-%, relative to the total weight of the composition;
- a polyvinylchloride resin and/or acrylic resin powder, preferably a polyvinylchloride resin; preferably 5 to 40 wt.-%, 8 to 30 wt.-%, preferably 10 to 20 wt.-%, based on the total weight of the pumpable thermally foaming filler composition;
- a foaming agent, preferably 1 to 10 wt.-%, 2 to 8 wt.-%, preferably 3 to 6 wt.-%, based on the total weight of the pumpable thermally foaming filler composition.

The method according to the present invention is particularly suitable to be used in sound dampening/vibration reduction, for example in automotive applications. Further aspects of the present invention are subject of other independent claims. Preferred embodiments of the invention are subject of dependent claims.

### Detailed Description of the Invention

The unit term "wt.-%" means percentage by weight, based on the weight of the respective total composition, if not otherwise specified. The terms "weight" and "mass" are used interchangeably throughout this document.

Volume changes on the thermally expandable material are determined using the DIN EN ISO 1183 method of density measurement (Archimedes principle) in deionised water in combination with sample mass determined by a precision balance.

The pumpable thermally foaming filler composition preferably contains a liquid epoxy resin. The liquid epoxy resin is a material which is liquid or at least flowable at ambient temperature (23°C). Polyepoxides which are known to the person skilled in the art as "reactive diluents" are also referred to in the present document as liquid epoxy resins.

Suitable liquid epoxy resins for use in the inventive composition include liquid resins of the formula (I) 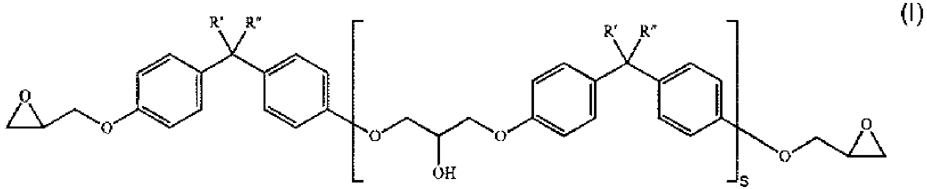 where R' and R" are each independently a hydrogen atom or a methyl group, and s has an average value of 0 to 1. Preference is given to those liquid resins of the formula (I) in which the index s has an average value of less than 0.2.

The liquid epoxy resins of the formula (I) are diglycidyl ethers of bisphenol A, bisphenol F and bisphenol A/F, where A represents acetone and F formaldehyde, which serve as reactants for preparation of these bisphenols. A bisphenol A liquid resin accordingly has methyl groups, a bisphenol F liquid resin hydrogen atoms, and a bisphenol A/F liquid resin both methyl groups and hydrogen atoms, as R' and R" in formula (I). In the case of bisphenol F, it is also possible for positional isomers to be present, especially derived from 2,4'- and 2,2'-hydroxyphenylmethane.

Such liquid epoxy resins are commercially available, for example as Araldite^{®} GY 204, Araldite^{®} GY 250, Araldite^{®} GY 260, Araldite^{®} GY 281 , Araldite^{®} GY 282, Araldite^{®} GY 285, Araldite^{®} PY 304, Araldite^{®} PY 720 (from Huntsman); D.E.R.^{®} 330, D.E.R.^{®} 331 , D.E.R.^{®} 332, D.E.R.^{®} 336, D.E.R.^{®} 354, D.E.R.^{®} 351 , D.E.R.^{®} 352, D.E.R.^{®} 356 (from Dow); Epikote^{®} 162, Epikote^{®} 827, Epikote^{®} 828, Epikote^{®} 158, Epikote^{®} 862, Epikote^{®} 169, Epikote^{®} 144, Epikote^{®} 238, Epikote^{®} 232, Epikote^{®} 235 (from Hexion), Epalloy^{®} 7190, Epalloy^{®} 8220, Epalloy^{®} 8230, Epalloy^{®} 7138, Epalloy^{®} 7170, Epalloy^{®} 9237-70 (from CVC), Chem Res^{®} E 20, Chem Res^{®} E 30 (from Cognis), Beckopox^{®} EP 1 16, Beckopox^{®} EP 140 (from Cytec), Epiclon EXA-4850 (from Sun Chemical).

Further suitable liquid epoxy resins are the glycidylization products of dihydroxybenzene derivatives such as resorcinol, hydroquinone and catechol; further bisphenols or polyphenols such as bis(4-hydroxy-3-methylphenyl)methane, 2,2-bis(4-hydroxy-3-methylphenyl)propane (bisphenol C), bis(3,5-dimethyl-4-hydroxyphenyl)methane, 2,2-bis(3,5-dimethyl-4-hydroxy- phenyl)propane, 2,2-bis(3,5-dibromo-4-hydroxyphenyl)propane, 2,2-bis(4- hydroxy-3-tert-butyl-phenyl)propane, 2,2-bis(4-hydroxyphenyl)butane (bisphenol B), 3,3-bis(4-hydroxyphenyl)pentane, 3,4-bis(4-hydroxyphenyl)hexane, 4,4-bis(4-hydroxyphenyl)-heptane, 2,4-bis(4-hydroxyphenyl)-2-methylbutane, 2,4-bis(3,5-dimethyl-4-hydroxyphenyl)-2-methylbutane, 1,1-bis(4-hydroxyphenyl)cyclohexane (bisphenol Z), 1,1-bis(4-hydroxyphenyl)-3,3,5-trinnethylcyclohexane (bisphenol TMC), 1,1-bis(4-hydroxyphenyl)-1-phenyl-ethane, 1,4-bis[2-(4-hydroxyphenyl)-2-propyl]benzene) (bisphenol P), 1,3-bis[2-(4-hydroxyphenyl)-2-propyl]benzene) (bisphenol M), 4,4'-dihydroxydiphenyl (DOD), 4,4'-dihydroxybenzophenone, bis(2-hydroxynaphth-1-yl)methane, bis(4-hydroxynaphth-1-yl)methane, 1,5-dihydroxynaphthalene, tris(4-hydroxyphenyl)methane, 1,1,2,2-tetrakis(4- hydroxyphenyl)ethane, bis(4-hydroxyphenyl)ether, bis(4-hydroxyphenyl) sulfone; condensation products of phenols with formaldehyde, which are obtained under acidic conditions, such as phenol novolacs or cresol novolacs; aromatic amines, such as aniline, toluidine, 4-aminophenol, 4,4'-methylenediphenyldiamine (MDA), 4,4'-methylenediphenyldi(N-methyl)amine, 4,4'-[1,4-phenylenebis(1 - methylethylidene)]bisaniline (bisaniline P), 4,4'-[1,3- phenylenebis(1 - methylethylidene)]bisaniline (bisaniline M).

In a further embodiment, the liquid epoxy resin is an aliphatic or cycloaliphatic polyepoxide, for example diglycidyl ether; a glycidyl ether of a saturated or unsaturated, branched or unbranched, cyclic or open-chain C2 to C3 diol, for example ethylene glycol, propylene glycol, butylene glycol, hexanediol, octanediol, a polypropylene glycol, dimethylolcyclohexane, neopentyl glycol; a glycidyl ether of a tri- or tetrafunctional, saturated or unsaturated, branched or unbranched, cyclic or open-chain polyol such as castor oil, trimethylolpropane, trimethylolethane, penta-erythritol, sorbitol or glycerol, and alkoxylated glycerol or alkoxylated trimethylolpropane; a hydrogenated bisphenol A, F or A/F liquid resin, or the glycidylization products of hydrogenated bisphenol A, F or A F; an N-glycidyl derivative of amides or heterocyclic nitrogen bases, such as triglycidyl cyanurate and thglycidyl isocyanurate, and reaction products of epichlorohydrin and hydantoin.

Aliphatic or cycloaliphatic liquid epoxy resins are, for example, commercially available as Araldite^{®} DY-C, Araldite^{®} DY-F, Araldite^{®} DY-H, Araldite^{®} DY-T, Araldite^{®} DY 0397, Araldite^{®} DY 3601 (from Huntsman), D.E.R.^{®} 732, D.E.R.^{®} 736 (from Dow); Heloxy^{®} BD, Heloxy^{®} HD, Heloxy^{®} TP, Epikote^{®} 877 (from Hexion), Beckopox^{®} EP 075 (from Cytec). Mixtures of aliphatic or cycloaliphatic polyepoxides and aromatic epoxides of the formula (I) can also be used, such is in particular mixtures of diglycidyl ethers of bisphenol A, bisphenol F and bisphenol A/F and diglycidylethers of α,ω-alkandiols, wherein the α,ω-alkandiols preferably comprise 2 to 10 carbon atoms. Such mixtures are commercially available for example from Dow as D.E.R. 358.

In a further embodiment, the liquid epoxy resin is a polyepoxide which has been prepared from the oxidation of olefins, for example from the oxidation of vinylcyclohexene, dicyclopentadiene, cyclohexadiene, cyclododecadiene, cyclododecatriene, isoprene, 1,5-hexadiene, butadiene, polybutadiene or divinylbenzene.

The liquid epoxy resin is preferably a liquid resins of the formula (I) as described above, more preferably the versions thereof described as preferred above.

A particular preferred liquid epoxy resin in the context of the present application is an epoxy resin based on bisphenol A diglycidylether having an epoxy equivalent weight of 156 to 250 g/eq, such as D.E.R.^{®} 331 from Dow.

The liquid epoxy resins are preferably included into the composition in an amount of 5 to 40 wt.-% based on the total weight of the composition. In a yet preferred embodiment, the liquid epoxy resin is incorporated into the composition in an amount of 8 to 30 wt.-%, 10 to 25 wt.-% and in particular 12.5 to 20 wt.-%.

As a mandatory ingredient, the inventive pumpable thermally foaming filler composition comprises a polyvinylchloride resin and/or acrylic resin powder.

As shown in the comparison of Ex.1 with Ref.2 in table 2, the lack of polyvinylchloride resin and/or acrylic resin powder leads to insufficient expansion behaviour and disadvantageous open pore structure.

The polyvinylchloride (PVC) resin in the composition of the present application can be a polyvinylchloride homo- or a copolymer, preferably a polyvinylchloride copolymer. If the polyvinylchloride is a copolymer it preferably comprises vinyl esters such as vinyl acetate or vinyl propionate as the comonomer to vinylchloride. The amount of the co-monomer preferably ranges from 1 to 25%, more typically is in the range of from 2 to 20%, 2 to 15%, 2 to 10% and most preferably 3 to 7%, relative to the total weight of the copolymer.

A suitable PVC-homopolymer in the context of the present application is Formolon KVH from Formosa. A particularly suitable PVC copolymer in the context of the present application is Formolon F40 also from Formosa.

The acrylic resin powder, which may be used instead or in addition to the polyvinyl chloride resin, is not particularly limited, except that it is preferably solid at ambient temperature (23°C). More preferably, the acrylic resin powder has a glass transition temperature Tg in the range of 50°C to 120°C and even more preferably in the range of 70°C to 90°C. The glass transition temperature is determined by DSC. In addition, it is preferred that the acrylic resin powder is capable of forming a plastisol.

The acrylic resin in the acrylic resin powder may be a homopolymer or a copolymer. A preferred acrylic resin is a resin based on methylmethacrylate, such as those available as Dianal LP-3106 or Dianal LP-3202 for Dianal America Inc. Another commercially available acrylic resin which can be used with advantage in the present application is Kane Ace U506 from Kaneka.

The polyvinyl chloride resin or resins and/or the acrylic resin powder or powders are suitably included into the composition in an amount ranging from 5 to 40 wt.-%, preferably in an amount of 8 to 30 wt.-% and most preferably in an amount of from 10 to 20 wt.-%.

As another mandatory ingredient, the inventive pumpable thermally foaming filler composition comprises a foaming agent. As the foaming agent for use in the invention, any substance may be used in so far as it decomposed by heating to generate a gas. Preferably, the foaming agent is a chemical foaming agent. More preferably, the foaming agent is selected from the list consisting of azo-compounds, nitroso compounds and hydrazine derivatives, more preferably selected from the list consisting of azo-dicarbonamide, N,N-dinitrosopentamethylene tetramine and diphenyl sulphone-3,3'-disulphohydrazide. These foaming agents may be used as one kind or as a mixture of two or more kinds thereof. In the context of the present application, dicyandiamide is particularly preferred as at least part of the foaming agent, because the degradation product thereof (ammonia) can aid the curing and crosslinking of the liquid epoxy resin.

The amount of the foaming agent in the pumpable thermally foaming filler composition of the invention is typically in the range of 1 to 10 wt.-%, 2 to 8 wt.-% and preferably in the range of 3 to 6 wt.-%.

The characteristic "pumpable" of the thermally foaming filler composition of the present application is understood such, that at ambient temperature (20°C) the filler has a viscosity which is suitable for pumping and preferably has a paste-like viscosity. The viscosity of the pumpable thermally foaming filler composition is preferably in the range of 50 to 500 Pa.s and preferably 150 to 400 Pa.s, when measured by means of a rheometer with heatable plate (MCR 301, AntonPaar) (gap 1000 µm, measuring plate diameter: 25 mm (plate/plate), deformation 0.01-10 % at 10 Hz, temperature: 45°C). When the viscosity is lower than 50 Pa.s, dripping can more easily occur and the shape cannot sufficiently be maintained during processing. If on the other hand, the viscosity exceeds 500 Pa.s, the workability of the material is greatly reduced.

As a further mandatory ingredient, the inventive pumpable thermally foaming filler composition comprises a rubber, in particular a synthetic rubber and preferably a partially crosslinked synthetic rubber. Exemplarily partially crosslinked rubbers for use in the inventive filler composition are preferably partially crosslinked diene rubbers, more preferably selected from the group consisting of acrylonitrile-isoprene copolymer rubber (NIR), acrylonitrile-butadiene copolymer rubber (NBR), styrene-butadiene copolymer rubber (SBR), a butadiene rubber (BR) and isoprene rubber (IR). The crosslinking may be the results of the addition of a crosslinking agent, such as divinyl benzene or sulphur. The addition of a rubber provides the advantages of improved rheological properties, sag resistance, wash-off resistance and a higher volume expansion of the resulting filler composition.

The rubber is typically incorporated into the inventive filler composition in amounts of from 1 to 20%, preferably 3 to 15 wt.-% and more preferably 5 to 10 wt.-%, relative to the total weight of the composition.

Next to the ingredients mentioned above, the pumpable thermally foaming filler composition may contain additional ingredients.

A further ingredient which can be used with advantage in the pumpable thermally foaming filler composition of the present application is a plasticizer. Therefore, the pumpable thermally foaming filler composition of the present application preferably comprises at least one plasticizer. The combination of low viscosity plasticizers and PVC and/or acrylic resin powder is advantageous for a stable paste-like state and advantageous for providing the cured material with good physical strength and good expansion rates especially after humidity storage.

As the plasticizer, any substance may be used insofar as the polyvinylchloride can be swollen and dissolved therein. Mentioned as plasticizers are, for example, phthalate esters such as di(2-ethylhexyl)phthalate, butyl benzyl phthalate, dinonylphthalate, diisononylphthalate (DIDP), diisodecylphthalate (DIDP), diundecylphthalate, ditridecylphthalate (DTDP), diheptylphthalate and butylphthalylbutylglycolate; aliphatic dibasic acid esters such as dioctyl adipate, didecyl adipate and dioctysebacate; polyglycolbenzoic acid esters such as polyoxyethylene glycol dibenzoate and polyoxypropylene glycol dibenzoate; phosphate esters such as tributylphosphate and tricresylphosphate; hydrocarbons such as alkyl-substituted diphenyl, alkyl-substituted terphenyl, partially hydrogenated terphenyl, aromatic processing oil and pile oil. These plasticizers may be used singly or as a mixture of two or more kinds thereof. Preferred among the afore-mentioned plasticizers in the context of the present application are phthalate esters, in particular diiosnonylphthalate (DINP), ditridecylphthalate (DTDP) and Diisodecylphthalate (DIDP).

A suitable amount of plasticizer in the context of the present application is from 5 to 40 wt.-%, preferably from 10 to 30 wt.-%, 15 to 25 wt.-% and in particular 10 to 20 wt.-%, relative to the total weight of the composition.

The pumpable thermally foaming filler composition of the present application preferably also contains a curing agent for the liquid epoxy resin. As the curing agent, a latent curing agent is preferably used which provides curing by heating and can usually be activated at temperatures of between 80 to 250°C. Specific examples of the latent curing agent include dicyandiamide, 4,4'-diaminodiphenylsulphone, imidazol derivatives such as 2-N-heptadecylimidazol, iso-phthalic dihydrazide, N,N-dialkylurea derivatives, N,N-dialkyl thiourea derivatives and melamine derivatives. These curing agents may be used independently or as a mixture of two or more of them depending on the curing conditions and their properties. A particularly preferred curing agent for use in the context of the present application is dicyandiamide. In one preferred embodiment dicyandiamide is used as the sole epoxy curing agent in the composition, as it was observed that the combination of liquid epoxy resin and dicyandiamide provides mixtures which are very stable on storage.

The amount of the curing agent is preferably in the range of 0.05 to 2.0 wt.-%, 0.1 to 1.5 wt.-%, 0.2 to 1.2 wt.-%, 0.4 to 1.0 wt.-%, more preferably in the range of 0.5 to 0.8 wt.-%, relative to the total weight of the composition. It has been observed that a high level of the liquid epoxy resin combined with a small amount of curing agent provides a material which is crosslinked to a suitable extent once cured and provides good adhesion properties on oiled metal substrates. In addition this system also gives good physical strength.

Next to the afore-mentioned ingredients, the pumpable thermally foaming filler composition of the present application in addition preferably comprises a filler, in particular an inorganic filler. Suitable inorganic fillers are for example calcium carbonate, silica, clay, and fly ash. These inorganic fillers may be used singly or as a mixture of two or more kinds thereof. It is also possible to use more than one modification of a filler such as e.g. different modifications of calcium carbonate.

The amount of fillers and in particular inorganic filler in the context of the present application is not particularly limited and depends on the viscosity of the composition without the filler (i.e., lower viscosity allows for a more filler to be incorporated whereas a higher viscosity without the filler only allows a low amount of filler to be incorporated) while maintaining the composition pumpable. The amount of a filler thus typically ranges from 10 to 55 wt.-%, preferably from 15 to 45 wt.-% and more preferably from 20 to 35 wt.-%, relative to the total weight of the composition.

The pumpable thermally foaming filler composition of the present application can in addition contain an appropriate amount of other additives as required, e.g., thixotropy imparting agents such as organic bentonite, fumed silica, castor oil derivatives, pigments such as carbon black, titanium dioxide, zinc dioxide or other inorganic pigments, dehydrating agents such as calcium oxide and powder silica gel and/or PVC-stabilizing agents.

The amount of these additional additives is not particularly limited, however it is preferred that content does not exceed 15 wt.-%, more preferably is 10 wt.-% or less and even more preferably is 8 wt.-% or less.

In a specifically preferred embodiment of the present application the pumpable thermally foaming filler composition of the present application comprises:
- 8 to 30 wt.-%, 10 to 25 wt.-%, preferably 12.5 to 20 wt.-% of a liquid epoxy resin, preferably a liquid resins of the formula (I);
- 5 to 40 wt.-%, 8 to 30 wt.-%, preferably 10 to 20 wt.-%, of polyvinylchloride resins and/or acrylic resin powder, preferably polyvinylchloride resins;
- 1 to 20%, 3 to 15 wt.-%, preferably 5 to 10 wt.-%, of a rubber, preferably a synthetic rubber, more preferably a diene rubber;
- 1 to 10 wt.-%, 2 to 8 wt.-%, preferably 3 to 6 wt.-%, of a foaming agent;
- 5 to 40 wt.-%, 10 to 30 wt.-%, 15 to 25 wt.-%, preferably 10 to 20 wt.-%, of a plasticizer, preferably phthalate esters;
- 0.05 to 2.0 wt.-%, 0.1 to 1.5 wt.-%, 0.2 to 1.2 wt.-%, 0.4 to 1.0 wt.-%, preferably -0.5 to 0.8 wt.-%, of a curing agent, preferably a latent curing agent;
- 10 to 55 wt.-%, 15 to 45 wt.-%, preferably 20 to 35 wt.-%, of fillers, preferably inorganic fillers.

The above mentioned wt.-% are based on the total weight of the composition.

The pumpable thermally foaming filler composition of the invention can be produced by mixing the ingredients mentioned above by a mixer. The type of the mixer to be used is not particularly limited and includes, for example, various mixers such as a planetary mixer and a kneader.

The method for bonding two substrates comprises the sequential steps of
- i) applying a pumpable thermally foaming filler composition on a first substrate S1, and
- ii) placing the second substrate S2 so that the distance between the first substrate S1 and the second substrate S2 at the place of application of the pumpable thermally foaming filler composition is between 2 - 10 mm, and
- iii) heating the first substrate S1 and the second substrate S2 to a temperature above the activation temperature of the foaming agent to foam the pumpable thermally foaming filler composition. In the time between step ii was performed and the start of step iii) the applied pumpable thermally foaming filler composition is not in contact with the second substrate S2. In this time period, the applied pumpable thermally foaming filler composition is preferably in its unfoamed state.

As shown in the comparison of Ex.1 with Ref.1 in table 1, the applied pumpable thermally foaming filler composition Ex.1 that is not in contact with the second substrate S2 after the positioning of S2 leads to improved Bond Line Read-Through compared to state of the art compositions as well as Ex.1 applied to be in contact with the second substrate S2 after the positioning of S2. It was further surprisingly found that the lap shear strength was comparable between the two ways of application of the composition Ex.1.

It is advantageous that in step i), the pumpable thermally foaming filler composition is applied in the form of a bead with a width of 3 - 18 mm, preferably 6 - 12 mm, more preferably 10- 12mm.

It is further advantageous that in that in step i), the pumpable thermally foaming filler composition is applied in the form of a bead with a height of 1 - 8 mm, preferably 1 - 4 mm, more preferably 1.5 - 3 mm, most preferably 1.5 - 2.5 mm.

It is also advantageous if in step i) the pumpable thermally foaming filler composition is applied in the form of a bead with a length of 10 mm to 2 m, preferably with a length of 2 cm to 10 cm or with a length of 0.5 m to 3 m. The first is advantageous if the composition is applied as spotted bead, for example to bond a vehicle bonnet. The later is beneficial if the composition is continuously applied over a long distance, for example to bond a vehicle roof.

Preferably, in step i), the pumpable thermally foaming filler composition is applied in the form of a rectangular bead. Preferably the ratio of the width to the height of the rectangular bead is 2 - 10, preferably 3 - 8, more preferably 5 - 8.

It was also found to be advantageous if in step i), the pumpable thermally foaming filler composition is applied in the form of a bead and in step ii) the ratio between the distance **DI** between the first substrate S1 and the second substrate S2 and the height **HT** of the bead at the place of application of the pumpable thermally foaming filler composition (**DI/HT**) is from >1 - 6.5, preferably 1.2 - 4.5, most preferably 1.5 - 2.75. As shown in the comparison of the different height/distance ratios in table 4 this is advantageous with respect to the quality of contact with the upper substrate. Said quality of contact leads to better corrosion resistance, adhesion on the substrate and vibration reduction.

In a preferred method, in step i), the pumpable thermally foaming filler composition is applied in the form of a rectangular bead, the height **HT** of the bead is from 1.0 - 3.5 mm, preferably 1.5 - 2.5 mm and the distance **DI** between the first substrate S1 and the second substrate S2 at the place of application of the pumpable thermally foaming filler composition is from 3 - 6 mm, preferably 4 - 5 mm.

The first substrate S1 and/or second substrate S2 preferably are metal substrates, more preferably oiled metal substrates. If appropriate, however, heat-resistant plastics, are also conceivable. The first substrate S1 and second substrate S2 may be made from the same or different materials.

Preferred metal substrates are as utilized, for example, in the construction of modes of transport, for example in the automobile industry, or in the production of white goods. The method of the invention is therefore especially suitable for bonding of metal substrates, for the manufacture of modes of transport, especially automobiles, buses, trucks, rail vehicles, ships or aircraft, or white goods, especially washing machines, tumble dryers or dishwashers, or parts thereof, preferably motor vehicles or installable components thereof.

Most preferably, the first substrate S1 is a supporting frame of a vehicle engine hood, trunk or door or a crossbeam of a vehicle roof and the second substrate S2 is a vehicle engine hood, trunk or door panel or a vehicle roof panel.

Preferably said metal substrates are oiled substrates meaning they are covered with corrosion protection oils known to the person skilled in the art. An example of such a corrosion protection oil is Anticorit PL 3802-39S.

Preferred examples of said metal substrates are metal substrates selected from the list consisting of steel, aluminium and magnesium, especially selected from the list consisting of electrolytically galvanized steel, hot-dip galvanized steel, bonazinc-coated steel, subsequently phosphated steel, aluminium, magnesium and magnesium alloys. Preferably the substrates are oiled substrates.

The pumpable thermally foaming filler composition is applied to the first substrate S1 in step (a) of the method of the invention. This is effected, for example, at an application temperature of the pumpable thermally foaming filler composition of 10°C to 80°C, preferably of 25°C to 50°C, more preferably of 30 to 40°C. The application is preferably effected in the form of a bead. Automatic application is preferred.

The pumpable thermally foaming filler composition can be applied over the entire surface or over part of the surface of the first substrate S1 facing the second substrate S2. In a preferred application, the pumpable thermally foaming filler composition is applied only on a part, preferably less than 20 %, less than 10 %, less than 5 %, preferably less than 2 %, of the surface of the substrate of the first substrate S1 facing the second substrate S2, especially if the first substrate S1 is a supporting frame of a vehicle engine hood, trunk or door.

In a later step ii), the second substrate S2 is placed so that the distance between the first substrate S1 and the second substrate S2 at the place of application of the pumpable thermally foaming filler composition is between 2 - 10 mm. Preferably, the first substrate S1 and the second substrate S2 are fixed in position after the placement, preferably with mechanical fixation means, preferably mechanical clamping, more preferably mechanical clamping followed by spot welding or laser welding, so that the distance between the first substrate S1 and the second substrate S2, preferably at the location where the pumpable thermally foaming filler composition is applied on a first substrate S1, does not change until step iii) is completed.

After step ii), the first substrate S1 and the second substrate S2 are heated to a temperature above the activation temperature of the foaming agent to foam the pumpable thermally foaming filler composition, wherein between step ii and step iii) the applied pumpable thermally foaming filler composition is not in contact with the second substrate S2.

To heat and preferably cure the pumpable thermally foaming filler composition in step iii), the pumpable thermally foaming filler composition is preferably heated to a temperature in the range from 150 to 220°C, preferably 160 to 200°C, preferably 170 to 190°C, most preferably 180°C. The heating can be effected, for example, by means of infrared radiation or induction heating or in an oven, for example a cathodic electrocoating oven. In this way, the adhesive bond with the pumpable thermally foaming filler composition is obtained.

Preferably the duration of said heating step is from 10 - 60 min, preferably 10 -40 min, 10 -30 min, most preferably 10 - 20 min.

Preferably, after step iii), the pumpable thermally foaming filler composition is foamed and cured and forms an adhesive bond between the first substrate S1 and the second substrate S2 by being in direct contact with the two substrates.

The pumpable thermally foaming filler composition in the adhesive bond can be cured in one step, but curing in two or more steps is also possible, in which case intermediate operating steps between or during the curing steps are possible, for example a wash and/or a dip-coating operation, for example a cathodic electrocoating operation, of the substrates with a subsequent wash.

Another aspect of the present invention is an **article** obtained from said method, especially a construction of modes of transport, especially in the automobile industry, or an article of white goods, most preferably selected from the list consisting of vehicle roof, engine hood, trunk hood and vehicle door.

The invention is further explained in the following experimental part which, however, shall not be construed as limiting the scope of the invention.

### Examples

A reference thermally expandable rubber composition (Ref.1) identical to composition E15 from WO2020048905 A1 was prepared and compared to the inventive pumpable thermally foaming filler composition Ex.1 described below.

For the formulation of the pumpable thermally foaming filler compositions Ex.1-Ex.3, reference formulations Ref.2-Ref.3 respectively, each ingredient was compounded according to the compounding amount shown in Table 1. The Premix for Ex.1 contains 12.9 wt.-% Styrene-Butadiene rubber, 26.8 wt.-% DIDP plasticizer, 39.9 wt.-% calcium carbonate filler and 20.4 wt.-% liquid epoxy resin (based on bisphenol A/epichlorhydrin with an epoxy equivalent weight of 180 to 190 g/eq). The amount of each component in the Premix for the compositions Ex.2-Ex.3 and Ref.2-Ref.3 was adjusted by keeping the same weight ratio between the components of the Premix as in the Premix for Ex.1.

**Table 1, All amounts are in parts by weight**

| | Ex.1 | Ex.2 | Ex.3 | Ref.2 | Ref.3 |
|---|---|---|---|---|---|
| Premix | 66 | 61.4 | 71.8 | 77.6 | 68.3 |
| DIDP plasticizer | 4.2 | 3.9 | 4.6 | 4.9 | 4.3 |
| PVC stabilizer | 1.5 | 1.4 | 1.6 | 1.8 | 1.5 |
| PVC-co-stabilizer | 1 | 0.9 | 1.1 | 1.2 | 1.0 |
| DER 331 liquid epoxy | 5 | 4.6 | 5.4 | 5.9 | 5.2 |
| PVC copolymer | 15 | 21.0 | 7.5 | 0.0 | 15.5 |
| Foaming agent (azodicarbonamide) | 3.2 | 3.0 | 3.5 | 3.8 | 0.0 |
| Dicyandiamide | 0.6 | 0.6 | 0.7 | 0.7 | 0.6 |
| Zinc oxide | 1 | 0.9 | 1.1 | 1.2 | 1.0 |
| Calcium carbonate | 2.5 | 2.3 | 2.7 | 2.9 | 2.6 |
| Total (wt.-%) | 100 | 100 | 100 | 100 | 100 |

### Determination of expansion

The volume increase in table 3 is determined using the DIN EN ISO 1183 method of density measurement (Archimedes principle) in deionised water in combination with sample mass determined by a precision balance.

### Determination of read-through

The compositions Ref.1 and Ex.1 were applied as a single bead (50 mm length, rectangular profile, 6 mm width, height as described in table 2) in the center of a test specimen (steel EG (DC06+ZE 75/75), thickness 0.25 mm, 150 × 105 mm). The specimen was than fixed in a special frame and a thin and only one side-painted steel sheet (DC01 C590 0,25 mm) was put on top of the other specimen (non-painted side wetted by the bead applied composition) with a distance of 4,5 mm (use of Teflon^{®} spacer). Both metal sheets were fixed at the outer edges by screwing the frame segments together. The test specimen was then put into an oven at 200 °C for 20 min. After cooling to 23 °C, the upper side of the specimen (white painted sheet metal surface) was analyzed with a deflectometer. The complete specimen is placed inside the deflectometer chamber and the white painted steel surface is illuminated by a periodic pattern of parallel white and black lines. A camera records the pattern reflected by the white sheet metal surface. By computational post processing of the data (filtering and profile extraction) a potential distortion can be visualized.

The obtained curvature profile was then compared with the result obtained by using a bead consisting of a commercial state of the art product as reference (SikaSeal-710 LS (Sika Germany). Compositions with a curvature profile similar, respectively slightly better, in terms of BLRT-performance than the one obtained with the reference composition were labeled with a rating of "4" (similar, curvature visible) or "3" (slightly decreased curvature) respectively. Compositions with a significantly improved curvature profile (very little bond-line-read-through detectable or no significant bond-line-read-through detectable) compared to the one obtained with the reference were labeled with a rating of "2" or "1" respectively. The results are shown in table 2.

### Determination of substrate contact quality

In table 4, a similar set-up as described above for the determination of read-through was used to determine the quality of the contact of the expanded compositions with the upper side ("upper substrate") that was put on top of the first specimen ("base substrate") containing the applied composition.

For all determinations, composition Ex.1 was applied as a single bead (50 mm length, rectangular profile, 12 mm width, height as described in table 4) in the center of a first specimen ("base substrate", steel EG (DC06+ZE 75/75), thickness 0.25 mm, 150 × 105 mm). The specimen was than fixed in a special frame and a second specimen ("upper substrate", steel EG (DC06+ZE 75/75), thickness 0.25 mm, 150 × 105 mm) was put on top of the first specimen with a distance indicated in table 4 (use of Teflon^{®} spacer, "Thickness spacer (mm)"). Both metal sheets were fixed at the outer edges by screwing the frame segments together. The test specimen was then put into an oven at 200 °C for 20 min. After cooling to 23 °C, the size of the contact area of the expanded composition with the upper substrate was compared to size of the contact area to the base. The following rating system was applied:
++ = contact area with upper substrate is ≥ 100 % of contact area of base substrate
+ = contact area with upper substrate is < 100 % - 85 % of contact area of base substrate
+/- = contact area with upper substrate is < 85 % - 70 % of contact area of base substrate

### Tensile strength (TS) (DIN ISO 527)

Curing conditions: 15 min at 180°C object temperature. The tensile strength was determined on a tensile machine at a tensile speed of 10 mm / min in a 3-fold determination according to DIN ISO 527.

### Lap shear strength (LSS) (DIN EN 1465)

Cleaned and then oiled with Anticorit PL 3802-39S test specimens of steel (thickness 0.8 mm) were bonded with the compositions on an adhesive surface of 25 × 20 mm using teflon spacers in a layer thickness of 2.0 mm for Ref.1 and Ex.1 and cured. An additional sample (outer right column in table 2) was produced for Ex.1 as described before also using teflon spacers with a thickness of 2.0 mm but the applied bead had only a thickness of 1.0 mm, hence before curing, the applied composition Ex.1 was not in contact with the upper steel piece.

Curing conditions: 15 min at 180°C object temperature. The lap shear strength was determined on a tensile machine at a tensile speed of 10 mm / min in a 3-fold determination according to DIN EN 1465.

**Table 2**

| **Composition** | **Ref.1** | **Ex.1** | **Ex.1** |
|---|---|---|---|
| Bond Line Read-Through BLRT | 4 | 2 | 1 |
| Height bead (mm) for BLRT determination | 4.5 | 4.5 | 2 |
| TS E-modulus (0.05-0.25) (N/mm²) | 0.25 | 0.34 | n.d. |
| Height bead (mm) for TS determination | 2 | 2 | n.d. |
| LSS (N/mm²) | 0.08 | 0.06 | 0.05 |
| Height bead (mm) for LSS determination | 2 | 2 | 1 |

**Table 3**

| **Composition** | **Ex.1** | **Ex.2** | **Ex.3** | **Ref.2** | **Ref.3** | **Ref.1** |
|---|---|---|---|---|---|---|
| Expansion [%] 25 min, 160 °C | 720 | 675 | 660 | 365 | 0 | 50 |

**Table 4, b.c. = before curing, a.c. = after curing**

| | | | | | | |
|---|---|---|---|---|---|---|
| Thickness spacer (mm) | 2 | 4 | 4 | 6 | 6 | 8 |
| Height bead (mm) | 1 | 1 | 2 | 1 | 2 | 3 |
| Ratio thickness spacer / height bead | 2 | 4 | 2 | 6 | 3 | 2.67 |
| Width bead b.c. (mm) | 12 | 12 | 12 | 12 | 12 | 12 |
| Width bead a.c. (mm) | 19 | 18 | 26 | 17 | 24 | 29 |
| Contact upper substrate | ++ | + | ++ | +/- | + | ++ |

## Claims

1. A method for bonding two substrates comprising the sequential steps of
- i) applying a pumpable thermally foaming filler composition on a first substrate S1, wherein the pumpable thermally foaming filler composition has a viscosity in the range of 50 to 500 Pa.s, when measured by means of a rheometer with heatable plate (MCR 301, AntonPaar) (gap 1000 µm, measuring plate diameter: 25 mm (plate/plate), deformation 0.01-10 % at 10 Hz, temperature: 45°C), and
- ii) placing the second substrate S2 so that the distance between the first substrate S1 and the second substrate S2 at the place of application of the pumpable thermally foaming filler composition is between 2 - 10 mm, and
- iii) heating the first substrate S1 and the second substrate S2 to a temperature above the activation temperature of the foaming agent to foam the pumpable thermally foaming filler composition, wherein between step ii) and step iii) the applied pumpable thermally foaming filler composition is not in contact with the second substrate S2.

2. The method of claim 1, **characterized in that** in step i) the pumpable thermally foaming filler composition is applied in the form of a bead with a width of 3 - 18 mm, preferably 6 - 12 mm, more preferably 10-12mm.

3. The method according to any of the preceding claims, **characterized in that** in step i) the pumpable thermally foaming filler composition is applied in the form of a bead with a height of 1 - 8 mm, preferably 1 - 4 mm, more preferably 1.5 - 3 mm, most preferably 1.5 - 2.5 mm.

4. The method according to any of the preceding claims, **characterized in that** in step i) the pumpable thermally foaming filler composition is applied in the form of a bead with a length of 10 mm to 2 m, preferably with a length of 2 cm to 10 cm or with a length of 0.5 m to 3 m.

5. The method according to any of the preceding claims, **characterized in that** in step i) the pumpable thermally foaming filler composition is applied in the form of a rectangular bead, preferably the ratio of the width to the height of the rectangular bead is 2 - 10, preferably 3 - 8, more preferably 5 - 8.

6. The method according to any of the preceding claims, **characterized in that** in step i) the pumpable thermally foaming filler composition is applied in the form of a bead and in step ii) the ratio between the distance **DI** between the first substrate S1 and the second substrate S2 and the height **HT** of the bead at the place of application of the pumpable thermally foaming filler composition (**DI/HT**) is from >1 - 6.5, preferably 1.2 - 4.5, most preferably 1.5 - 2.75.

7. The method according to any of the preceding claims, **characterized in that** in step i) the pumpable thermally foaming filler composition is applied in the form of a rectangular bead, the height **HT** of the bead is from 1.0 - 3.5 mm, preferably 1.5 - 2.5 mm and the distance **DI** between the first substrate S1 and the second substrate S2 at the place of application of the pumpable thermally foaming filler composition is from 3 - 6 mm, preferably 4 - 5 mm.

8. The method according to any of the preceding claims, wherein the pumpable thermally foaming filler composition comprises:
- at least one rubber, preferably a synthetic rubber, more preferably a partially crosslinked synthetic rubber and more preferably a diene rubber, preferably in an amount from 1 to 20%, preferably 3 to 15 wt.-% and more preferably 5 to 10 wt.-%, relative to the total weight of the composition;
- a polyvinylchloride resin and/or acrylic resin powder, preferably a polyvinylchloride resin; preferably 5 to 40 wt.-%, 8 to 30 wt.-%, preferably 10 to 20 wt.-%, based on the total weight of the pumpable thermally foaming filler composition;
- a foaming agent, preferably 1 to 10 wt.-%, 2 to 8 wt.-%, preferably 3 to 6 wt.-%, based on the total weight of the pumpable thermally foaming filler composition.

9. The method according to claim 8, **characterized in that** the amount of polyvinylchloride resin and/or acrylic resin powder, preferably a polyvinylchloride resin, is 5 to 40 wt.-%, preferably 8 to 30 wt.-%, more preferably 10 to 20 wt.-%, based on the total weight of the pumpable thermally foaming filler composition.

10. The method according to any of claims 8-9, **characterized in that** the pumpable thermally foaming filler composition further comprises a liquid epoxy resin, preferably in an amount of 8 to 30 wt.-%, 10 to 25 wt.-%, preferably 12.5 to 20 wt.-%, based on the total weight of the pumpable thermally foaming filler composition.

11. The method according to claim 10, **characterized in that** the pumpable thermally foaming filler composition further comprises a curing agent, preferably a latent curing agent, more preferably dicyandiamide, for the liquid epoxy resin, preferably in an amount of 0.05 to 2.0 wt.-%, 0.1 to 1.5 wt.-%, 0.2 to 1.2 wt.-%, 0.4 to 1.0 wt.-%, more preferably in the range of 0.5 to 0.8 wt.-%, based on the total weight of the pumpable thermally foaming filler composition.

12. The method according to any of claims 8-11, **characterized in that** the foaming agent is a chemical foaming agent, more preferably, the foaming agent is selected from the list consisting of azo-compounds, nitroso compounds and hydrazine derivatives, more preferably selected from the list consisting of azo-dicarbonamide, N,N-dinitrosopentamethylene tetramine and diphenyl sulphone-3,3'-disulphohydrazide.

13. The method according to any of the preceding claims, **characterized in that** the first substrate S1 is a supporting frame of a vehicle bonnet or a crossbeam of a vehicle roof and the second substrate S2 is a vehicle bonnet panel or a vehicle roof panel.

14. An article obtained by the method of claim 1 to claim 13, especially a construction of modes of transport, especially in the automobile industry, or an article of white goods, most preferably selected from the list consisting of vehicle roof, engine hood, trunk hood and vehicle door.
